Europäisches Patentamt

European Patent Office

Office européen des brevets

(19)

(11) Publication number: **0 442 753 A2**

# (12) EUROPEAN PATENT APPLICATION

(21) Application number: **91301236.5**

(22) Date of filing: **15.02.91**

(51) Int. Cl.$^5$: **C08L 33/06**, C08K 5/00,
// E04B1/66

(30) Priority: **16.02.90 US 480990**

(43) Date of publication of application:
**21.08.91 Bulletin 91/34**

(84) Designated Contracting States:
**AT BE DE DK ES FR GB GR IT NL SE**

(71) Applicant: **W.R. Grace & Co.-Conn.**
**1114 Avenue of the Americas**
**New York New York 10036 (US)**

(72) Inventor: **Gaidis, James Michael**
**9991 Timberknoll Lane**
**Ellicott City, MD 20143 (US)**
Inventor: **Wiercinski, Robert Alan**
**83 Belmont Street**
**Somerville, MA 02145 (US)**
Inventor: **Ehrlich, Susan Gail**
**2354 Sorrel Court**
**Baltimore, MD 21209 (US)**

(74) Representative: **Bentham, Stephen et al**
**J.A. Kemp & Co. 14 South Square Gray's Inn**
**London, WC1R 5LX (GB)**

(54) **Low temperature acrylic latex compositions and methods for waterproofing structures.**

(57) Disclosed are methods of reducing water penetration through civil engineering structures which comprise applying to the structures a waterproofing agent pretreatment composition including acrylic or vinyl acrylic latices and various freezing point depressing agents. Also disclosed are packages including these pretreatment compositions and methods for using these pretreatment compositions to waterproof various civil engineering construction materials.

EP 0 442 753 A2

# LOW TEMPERATURE ACRYLIC LATEX COMPOSITIONS AND METHODS FOR WATERPROOFING STRUCTURES

The present invention relates to compositions and methods useful for waterproofing or dampproofing various water-penetrable materials used in building construction and other civil engineering projects. Specifically, the compositions comprise novel aqueous waterproofing agent pretreatment compositions including acrylic and vinyl acrylic latices and various freezing point depressing agents and methods for using these new aqueous pretreatment compositions to waterproof water-penetrable civil construction materials which can be used at temperatures at or below 25°F.

Various materials used in building construction and other civil engineering projects such as roads and bridges are susceptible to water penetration resulting either from their inherent properties or imperfections such as cracks or pores. Reducing or eliminating water penetration through structures formed of these materials often is desirable such as for below-grade building walls, and may be critical in certain structures such as those housing expensive electrical equipment or tunnels moving vehicular or pedestrian traffic under bodies of water. Available waterproofing agents include ethylene propylene diene monomer (EPDM) sheets, polyvinyl chloride sheets, Bentonite panels, built-up asphalt systems, coal tar-based, and other asphalt-based compositions. Asphalt-based compositions are preferred ; most preferred are preformed, flexible sheet-like laminates of support film(s) and bituminous layer(s) (waterproofing laminates) such as described in U.S. Patent Nos. 3,741,856 ; 3,853,682 ; and 3,900,102. Bituthene(R) brand of waterproofing membrane is an example of preferred, commercially available asphalt-based waterproofing agents.

Many currently available waterproofing agents are very effective when applied correctly. For example, when using waterproofing laminates as a waterproofing agent, current widespread practice includes application of a pretreatment to the structure before application of the waterproofing laminate. Most pretreatments commercially available are based upon volatile organic compounds and usually contain high levels of these compounds as solvents. Known aqueous pretreatments, such as asphalt emulsions, have not been used widely because of poor water immersion resistance and freeze/thaw resistance. Consequently, use of most commercially available pretreatments is fraught with disadvantages including the need to exercise great care to avoid fire hazard and atmospheric release of volatile organic compounds, or risk of failure resulting from poor water immersion resistance or cold temperature applicability.

Therefore, despite use of waterproofing agents that require pretreatments, such as waterproofing laminates, for many years there has been and remains a need for pretreatment compositions which eliminate use of volatile organic compounds without sacrificing the strength and duration of the bond between the waterproofing agent and structure and which can be applied when ambient temperatures may be significantly below 32°F, for example at least down to about 20°F.

Acrylic latex formulations including about 27 wt. % latex solids and about 9 wt. % 2-butoxyethanol, about 4 wt. % 2-(2-ethoxyethoxy) ethanol, and about 1 wt. % dibutyl phthalate are known for use as lacquers. These formulations may have freezing points below 32°F but are not useful as waterproofing agent pretreatments at or below 25°F.

U.S. Patent No. 4,897,313 describes use of water-based acrylic latex compositions as waterproofing agent pretreatments. These acrylic latex pretreatment compositions overcome many of the disadvantages of other aqueous and nonaqueous pretreatment but cannot be used at temperatures at or below 25°F.

U.S. Patent No. 3,940,540 to Schmidt teaches built-up roofing employing precoated felts inhibited from slipping by use of bituminous emulsions to bind the felts. A minor amount of compatible latex is incorporated into the emulsion to increase the adhesion of bonded felts.

U.S. Patent No. 4,172,830 to Rosenberg et al. is one of many examples of references disclosing sheet-like flexible materials used for waterproofing.

U.S. Patent No. 4,362,586 to Uffner et al. describes use of polyamide resins as primers for highway repairs using asphaltic membranes.

U.S. Patent No. 4,731,399 discloses extending certain latices by addition of up to about 40% by weight of an emulsion of asphalt, bitumen, or coal tar. The extended latices are said to be useful in adhering scrim to carpet or in manufacture of attached foamed carpet backing.

U.S. Patent No. 4,597,817 to Larsen describes processes for preparation of a water-impervious surface coating on a substrate which comprises applying to the substrate an aqueous bitumen emulsion containing, in part, 5 to 55% by weight of an acrylic prepolymer.

U.S. Patent No. 4,544,690 to Ladish discloses an aqueous rubberized coal tar emulsion composition suitable for coating and sealing bituminous substrates containing asphalt in which the coal tar emulsion includes water admixed with a small amount of carboxylated butadiene/styrene/acid copolymer latex having a particular particle size.

U.S. Patent No. 4,104,211 to Keene et al. describes pipe sealants made from an aqueous emulsion of non-cationic asphalt and rubber.

U.S. Patent No. 4,176,102 to Favata teaches sealant asphaltic emulsion compositions having 20 - 50 parts by volume of a copolymer prepared by copolymerization of a vinyl acetate monomer with an organic acid.

U.S. Patent No. 4,619,166 to DeFatis teaches a mortar for waterproofing and protective coverings used in building and road construction wherein the mortar includes a mixture of an acrylic emulsion and finely ground clay which has been baked at a temperature range between 600°C and 1,400°C.

U.S. Patent No. 4,151,025 to Jacobs describes use of volatile organic solvent-based primers with laminated waterproofing membranes.

The present invention relates to methods useful for attaching waterproofing agents to water-penetrable constructions materials, compositions useful in these methods, and structures resulting from use of these methods. More specifically, the present invention relates to using compositions including acrylic or vinyl acrylic latices and various freezing point depressing agents in application of waterproofing agents to buildings and other civil engineering structures at temperatures at or below about 25°F.

Optimal waterproofing of structures such as buildings, bridges, roads, and tunnels requires bonds between the structure and waterproofing agent which endure essentially for the life of the structure. These enduring bonds even are important in applications such as subterranean basements, where the backfill holds the waterproofing agent in place, to prevent migration along the surface of the structure of water which may enter through damaged areas of the waterproofing agent. To achieve enduring bonds between structures and asphalt or coal tar-based waterproofing agents, pretreatments usually are applied prior to application of the waterproofing agent. All the waterproofing agent pretreatments in current widespread use have high levels of volatile organic compounds, usually as solvents, and thus present potential fire hazards and sources of atmospheric release of volatile organic compounds. Available aqueous waterproofing pretreatments have not enjoyed widespread use largely because they cannot be stored or used when ambient temperatures may fall to 25°F, especially down to about 20°F.

The present invention resides in the discovery that when used as waterproofing agent pretreatments aqueous mixtures of acrylic or vinyl acrylic latices and various freezing point depressing agents facilitate formation of strong and enduring bonds between waterproofing agents and the structure to which they are applied. Preferred aqueous pretreatments are those which have a freezing point at or below about 25°F. More preferred are aqueous pretreatments having a freezing point at or below 20°F. Surprisingly, it was discovered that various agents known to be useful as freezing point depressants in other applications can be added to aqueous-based acrylic and vinyl acrylic latex compositions without eliminating their utility as waterproofing agent pretreatment compositions. It was expected that addition of any freezing point depressing agents in amounts sufficient to reduce the pretreatment's freezing point to at or below about 25°F to aqueous-based acrylic and vinyl acrylic latex compositions would render such compositions unsuitable for use as waterproofing agent pretreatment compositions. Butoxypropanol, 10.4% by weight, in a composition containing 28.4% by weight acrylic latex solids and 61.2% by weight water is an example of a known freezing point depressing agent found not to be useful in aqueous-based latex waterproofing agent pretreatment compositions.

Various freezing point depressing agents, however, were discovered to be useful in aqueous-based acrylic and vinyl acrylic latex waterproofing agent pretreatment compositions having freezing points at or below 25°F. Such freezing point depressing agents are agents having infinite water solubility, which do not coagulate the latex during preparation, and which have a vapor pressure at 25°C that is not more than about one half the vapor pressure of water. Preferred freezing point depressing agents are those which have a solubility parameter that is about 2 or more units $(cal./cm^3)^{\frac{1}{2}}$ greater than the solubility parameter for the latex being used. Preferred freezing point depressing agents include $C_2$ to $C_5$ alkyl diols such as ethylene glycol, propylene glycol, and butane diol ; N-methyl pyrrolidinone ; and dimethyl formamide. Other useful freezing point depressing agents are methoxyethanol, and methoxypropanol. Persons skilled in the art can determine useful freezing point depressing agents using well known techniques. Example 5 provides data supporting the unexpected utility of these compositions as waterproofing agent pretreatments.

Preferred acrylic latices include homopolymers of acrylic acid esters ; homopolymers of methacrylic acid esters ; copolymers or terpolymers of acrylic acid esters ; copolymers or terpolymers of methacrylic acid esters; and copolymers or terpolymers of acrylic acid esters and methacrylic acid esters. In each of these latices the ester substituent may be methyl, butyl, ethyl, dodecyl, 2-ethyl hexyl, 2-ethyl butyl, 2-heptyl, hexyl, isopropyl, octyl, or propyl. Other preferred latices include comonomers or termonomers of acrylic acid, methacrylic acid, acrylonitrile, and styrene.

Preferred vinyl acrylic latices include copolymers of vinyl acetate and an acrylic acid ester or a methacrylic acid ester, most preferably butyl acrylate. Other preferred vinyl acrylic latices include copolymers of vinyl

3

chloride and an acrylic acid ester or methacrylic acid ester, most preferably butyl acrylate, and a terpolymer of vinyl acetate, vinyl chloride, and an acrylic acid ester or methacrylic acid ester, most preferably butyl acrylate.

The acrylic and vinyl acrylic latices used in the invention should be selected such that the latex polymer plus absorbed freezing point depressing agent has a minimum film forming temperature at or below 25°F.

Additional optional components in these latices include cationic, anionic, or nonanionic surfactants and, optionally, tackifiers such as rosin esters.

Generally, any acrylic latex or vinyl acrylic latex which, when used as a waterproofing agent pretreatment, provides bonds sufficiently strong and enduring to secure the waterproofing agent to the structure essentially for the life of the structure are used in this invention. Persons skilled in the art readily are able to select from acrylic and vinyl acrylic latices which are operable in this invention. One method available for making the selection is to determine whether the pretreatment forms a film when applied to construction materials at or below 25°F.

The invented waterproofing agent pretreatment compositions preferably include about 10 to about 65 wt. % latex solids, about 4 to about 33 wt. % freezing point depressing agent, and about 17 to about 80 wt. % water and may include other optional components. More preferred invented waterproofing agent pretreatment compositions include about 10 to about 53 wt. % latex solids, about 9 to about 33 wt. % freezing point depressing agent, and about 23 to about 80 wt. % water or about 16 to about 53 wt. % latex solids, about 9 to about 26 wt. % freezing point depressing agent, and about 23 to about 75 wt. % water. Most preferred are compositions containing about 20 wt. % latex solids and about 12 wt. % freezing point depressing agent. All pretreatment formulations should be prepared such that the ratio of freezing point depressing agent to latex solids is less than or equal to about 1 and the ratio of freezing point depressing agent to water is greater than or equal to about 0.12 but less than or equal to about 1. All wt. percentages of latex, freezing point depressing agent, and water are determined exclusive of any other components which may be included in the pretreatment composition. Compositions including higher concentrations of latex solids and freezing point depressing agents which are intended for dilution prior to use are within the above ranges if the diluted form is within these ranges.

The invented waterproofing agent pretreatment compositions also may include styrene maleic anhydride copolymer having a molecular weight of about 2,000 (SMA) and ammonia. Preferred compositions including SMA and ammonia have about 2 wt. % SMA and about 0.4 wt. % ammonia.

As used in the specification and claims a waterproofing agent pretreatment(s) is a composition used as a surface conditioner or a composition used as a primer. A surface conditioner composition is applied to a structure surface to adhere dust and other contaminants to the surface thereby enhancing the mechanical integrity of the surface. Primers are compositions applied to structure surfaces which may perform the functions of surface conditioners. In addition primers also promote good initial adhesion of the waterproofing agent by filling in voids in microscopically rough structure surfaces thereby providing a smoother surface that is more receptive for bonding. Because of this characteristic the preferred waterproofing agent, a pressure sensitive adhesive waterproofing laminate, need not be as deformable to make good contact with a primed surface as would be the case for a conditioned surface. Also a primer layer generally because of its greater thickness than a conditioner layer is tacky. Tackiness also aids in promoting good initial adhesion. Primer compositions generally have a higher solids content than surface conditioner compositions.

In the invented methods, waterproofing materials based on coal tar or asphalt are used, asphalt-based waterproofing materials are preferred. Especially preferred are waterproofing materials constructed of preformed, flexible sheet-like laminates of support films and bituminous layers which are referred as waterproofing laminates. Various waterproofing laminates are commercially available. Bituthene(R) brand waterproofing membranes are preferred commercially available waterproofing laminates.

Various civil engineering structures including, for example, buildings, bridges, roads, and tunnels, are made waterproof using the present invention. As used herein, making a structure "waterproof" means reducing or eliminating the ability of water to penetrate the structure. The present invention is used to make waterproof structures constructed of materials which are water-penetrable either inherently or as a result of imperfections such as cracks or pores. The types of water-penetrable construction materials with which the present invention is used include wood, brick, stone, blended cements, pozzolanic cements, or concrete, preferably Portland cement concrete.

According to the presently invented method for reducing water penetration through a structure, initially a pretreatment including one or more of the above latices and freezing point depressing agents is applied to a structure and allowed to dry. Thereafter, a waterproofing agent is affixed to the pretreatment-coated structure surface. Using the invented method, the pretreatment preferably is applied to a structure surface at a coverage rate of about 100-1200 sq. ft./gal., preferably about 100-400 sq. ft./gal. when used as a primer and 400-1,200 sq. ft./gal. when used as a surface conditioner. Other suitable coverage rates and film thicknesses are readily determined by persons skilled in the art.

Waterproofing laminates are the preferred waterproofing agents for use in the invented methods. Preferred waterproofing laminates have a bituminous layer comprised of about 29 - 60% by weight asphalt, about 25 -55% by weight process oil, about 10-35%, preferably 16-35% by weight of a thermoplastic block polymer of styrene and butadiene monomers or random styrene and butadiene rubber polymers. As used herein, the weight percent of asphalt, process oil, and thermoplastic block polymer of butadiene and styrene is calculated based on the total of these components not including fillers, which may be included in amounts up to 50%, preferably 10-20%, by weight of the total weight of asphalt, process oil, thermoplastic block polymer of butadiene and styrene, and filler, or any other components.

In more preferred waterproofing laminates the asphalt used has the following alumina separation (ASTM D4124) ranges and preferred ranges :

|  | Range | Preferred Range |
|---|---|---|
| Saturates | 5 - 25% | 8 - 15% |
| Naphthenic Aromatics | 15 - 40% | 32 - 40% |
| Polar Aromatics | 30 - 50% | 40 - 46% |
| Asphaltenes | 5 - 30% | 8 - 15% |

Also, in the preferred waterproofing laminates the preferred process oil for use in the bituminous layer has the following clay gel separation (ASTM D-2007) ranges :

|  |  |
|---|---|
| Saturates | 10 - 30% |
| Polar Compounds | 10 - 20% |
| Aromatics | 50 - 85% |
| Asphaltenes | 0 - 0.5% |

Additionally, in the preferred waterproofing laminates preferred thermoplastic block polymers of styrene and butadiene monomers are mixtures of polymers having a butadiene :styrene ratio of about 70 :30 and a block polystyrene content of about 30% (high molecular weight polymer) and polymers having a butadiene :styrene ratio of about 75 :25 and a block polystyrene content of about 18% (low molecular weight polymer). More preferred are polymers in which the ratio of the low molecular weight polymer to the high molecular weight polymer is in the range of 5 :1 to 1 :1 ; most preferred are polymers wherein the ratio of low molecular weight polymer to high molecular weight polymer is about 3.8 :1 or 2 :1. In the preferred waterproofing laminates including random styrene and butadiene rubber polymers, the preferred styrene : butadiene ratio is in the range of 1 :99 to 35 :65, the most preferred range is 15 :85 to 28 :72.

In another aspect the present invention is a package including an aqueous-based pretreatment including one or more of the above latices and freezing point depressing agents and a waterproofing laminate used in the presently invented methods. The invention also includes a structure to which has been attached a presently invented latex pretreatment and a coal tar or asphalt-base waterproofing agent used in the invented methods. Also included within the invention are compositions including acrylic or vinyl acrylic latexes and freezing point depressing agents which may be useful in other than waterproofing applications.

Contemplated equivalents are compositions useful as waterproofing agent pretreatments which include latices similar to the above described acrylic and vinyl acrylic latices and freezing point depressing agents which can be added in amounts sufficient to reduce the freezing point to at or below about 25°F without rendering the latex composition unsuitable for use as a waterproofing agent pretreatment and methods for using these pretreatments to waterproof civil construction materials.

### Example 1

#### Acrylic Latex Pretreatment

A waterproofing agent pretreatment composition was prepared from UCAR 123(R) (Union Carbide), an acrylic latex which is a terpolymer of butyl acrylate, styrene, and acrylonitrile ; ethylene glycol, and water. The composition was prepared by blending the components in amounts sufficient to yield a composition having 47.3 weight % UCAR 123 (R) latex (28.4 wt. % latex solids), 10.4 weight % ethylene glycol and 42.3 weight % water (including water in UCAR 123).

## Example 2

### Acrylic Latex Pretreatment

An acrylic latex pretreatment composition containing propylene glycol was prepared as described in Example 1 by substituting propylene glycol for ethylene glycol.

## Example 3

### Acrylic Latex Pretreatment

An acrylic latex pretreatment composition containing 1,3-butanediol was prepared as described in Example 1 by substituting 1,3-butanediol for ethylene glycol.

## Example 4

### Acrylic Latex Pretreatment

An acrylic latex pretreatment composition containing dimethyl formamide was prepared as described in Example 1 by substituting dimethyl formamide for ethylene glycol.

## Example 5

### Adhesion Testing

Table I shows results of adhesion testing of waterproofing pretreatment compositions containing UCAR 123[R] acrylic latex 47.3 wt. % (28.4 wt. % latex solids), freezing point depressing agent 10.4%, and water 42.3 wt. % (including water in UCAR 123). The adhesion test procedure consists of coating a pretreatment composition onto a cast concrete block at a coverage rate of approximately 400 sq. ft./gal. The coated block then is force air dried at room temperatures for about 2 hours. Next, an about 3″ by 6″ sample of waterproofing laminate is applied to the block and quickly rolled 4 times with a thirty-pound roller. After aging for one day at room temperature adhesion is measured using an Instron[R] mechanical tester (tensile testing madrine) using a peeloff angle of 90° and a crosshead speed of 2″ per minute.

### TABLE I

| Freezing Point Depressing Agent | Bond Strength (lb/in) |
|---|---|
| None | 5.7 |
| Ethylene glycol | 5.8 |
| Propylene glycol | 6.1 |
| Butane diol | 7.0 |
| Dimethyl formamide | 6.7 |

## Claims

1. A composition useful as a waterproofing agent pretreatment at or below 25°F comprising
   an acrylic or vinyl acrylic latex ; and

a freezing point depressing agent in an amount sufficient to reduce the pretreatment composition freezing point to or below about 25°F which has infinite water solubility, does not coagulate the latex during formulation preparation, and has a vapor pressure at 25°C that is not more than about one half the vapor pressure of water.

2. A composition according to claim 1 wherein the freezing point depressing agent has a solubility parameter that is at least 2 units greater than the solubility parameter of the latex.

3. A composition according to claim 1 or 2 wherein the latex is an acrylic latex.

4. A composition according to claim 1, 2 or 3 wherein the acrylic latex is selected from
    (a) homopolymers of acrylic acid esters, homopolymers of methacrylic acid esters, copolymers or terpolymers of acrylic acid esters, copolymers or terpolymers of methacrylic acid esters, and copolymers or terpolymers of acrylic acid esters and methacrylic acid esters wherein the ester substituent is selected from methyl, butyl, ethyl, dodecyl, 2-ethyl hexyl, 2-ethyl butyl, 2-heptyl, hexyl, isopropyl, octyl, and propyl, and
    (b) polymers comprising comonomers or termonomers of acrylic acid, methacrylic acid, acrylonitrile, or styrene.

5. A composition according to claim 4 wherein the latex comprises butyl acrylate 40 to 100 wt. %, styrene 0 to 60 wt. %, and acrylonitrile 0 to 10 wt. % or butyl acrylate 70 to 100 wt. %, styrene 10 to 25 wt. %, and acrylonitrile 0 to 5 wt. %.

6. A composition according to any one of claims 1 to 5 wherein the freezing point depressing agent is ethylene glycol or propylene glycol.

7. A package comprising a waterproofing agent pretreatment composition according to any one of claims 1 to 6 .

8. A package according to claim 7 which comprises a waterproofing laminate.

9. A package according to claim 8 wherein the waterproofing laminate has a bituminous layer comprising 29 to 54 wt. % asphalt, 25 to 55 wt. % process oil, and 10 to 35 wt. % thermoplastic block polymer of styrene and butadiene monomers or random styrene and butadiene rubber polymers.

10. A method for reducing water penetration through a structure which comprises applying to the structure a waterproofing agent pretreatment composition according to claim to any one of claims 1 to 6.

11. A method according to claim 10 which comprises the application to the structure of a waterproofing laminate as a waterproofing agent.

12. A method according to claim 11 wherein the waterproofing laminate is as defined in claim 9.